# EUROPEAN PATENT SPECIFICATION

(11) **EP 4 096 121 B1**
(45) Date of publication and mention of the grant of the patent: **25.06.2025**
(21) Application number: 21756637.1
(22) Date of filing: 02.02.2021
(51) Int. Cl.: H04J 3/06

(54) **COMMUNICATION DEVICE AND CLOCK SYNCHRONIZATION METHOD**
KOMMUNIKATIONSVORRICHTUNG UND TAKTSYNCHRONISATIONSVERFAHREN
DISPOSITIF DE COMMUNICATION ET PROCÉDÉ DE SYNCHRONISATION D'HORLOGE

(30) Priority: 20.02.2020 CN 202010104370
(43) Date of publication of application: 30.11.2022
(73) Proprietor: Huawei Technologies Co., Ltd., Shenzhen, Guangdong 518129 (CN)
(72) Inventor: LIN, Peiqing, Shenzhen, Guangdong 518129 (CN); WANG, Jing, Shenzhen, Guangdong 518129 (CN)
(74) Representative: Goddar, Heinz J.
(86) International application number: PCT/CN2021/074864
(87) International publication number: WO 2021/164541

(56) References cited:
- CN-A- 1 510 845
- CN-A- 101 882 967
- CN-A- 109 995 452
- CN-B- 107 229 305

## Description

### TECHNICAL FIELD

This application relates to the field of communications technologies, and in particular, to a communications device and a clock synchronization method.

### BACKGROUND

An optical transport network (optical transport network, OTN) can support transmission of a plurality of types of signals, which has been developed rapidly in recent years, and gradually becomes one of the mainstream technologies in the field of optical communications. A plurality of OTN transmission devices are usually disposed in a network constructed based on the technology, to implement signal transmission.

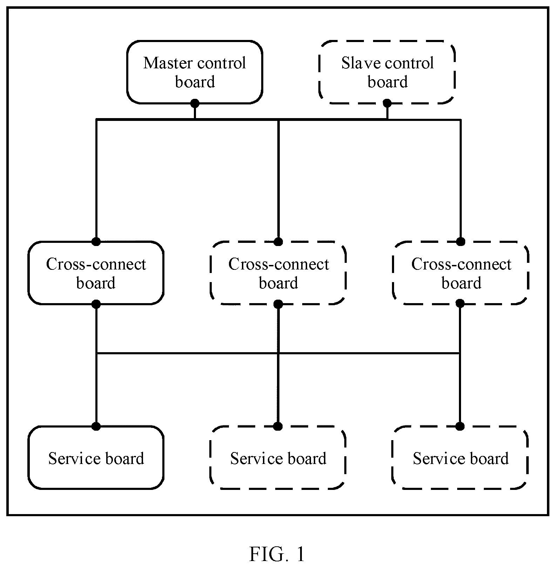

FIG. 1 is a schematic diagram of a structure of an OTN transmission device. As shown in FIG. 1, the device includes a control board, a cross-connect board, and a service board. The control board is integrated with a clock function. Therefore, the control board may provide a clock for synchronization to boards such as the cross-connect board and the service board, so that the entire device is in a clock synchronization state, to normally perform related service processing.

However, if the master control board goes offline (that is, removed from the device) due to some factors, a synchronization relationship between the boards cannot be maintained, and a related service cannot be normally performed, leading to service interruption.

CN 107229305 B describes a method of lossless system clock switching, comprising the following steps: S1) initializing control card A, control card B and business cards: the clock mode of control card A is set to the master mode, and the clock mode of control card B is set to the slave mode; S2) the master-slave control module of the control card A monitors the master-slave switching trigger signal, and sends a switching command to the control card Band the business card; S3) after control card B receives the switching command, the clock mode is switched from the slave mode to the master mode; S4) the clock mode switching of control card B is completed to notify the business card; S5) after the business card receives the notification from the control card B, the clock tracks the control card B; S6) the clock mode of control card A is switched from the master mode to the slave mode.

### SUMMARY

This application provides a communications device and a clock synchronization method, to maintain clock synchronization between a cross-connect board and a service board after a control board goes offline, to continue to normally perform related service processing, thereby avoiding service processing interruption.

A first aspect of embodiments of this application provides a communications device. The communications device includes a control board, a first cross-connect board, and a service board. The control board is integrated with a clock function. When the control board is online, a first clock required for synchronous working of each board in the device may be generated, and the first clock for synchronization is provided to each board. Therefore, when the control board is online, the control board may serve as a clock source to provide the first clock to the first cross-connect board and the service board, so that the first cross-connect board and the service board can work synchronously to perform a related service.

After receiving a go-offline signal, the control board may send a first notification signal to the first cross-connect board and the service board. The first notification signal is used to indicate that the clock source switches from the control board to the first cross-connect board. After receiving the first notification signal, the first cross-connect board maintains a second clock based on the first notification signal by using a local crystal oscillator of the first cross-connect board. A frequency of the second clock is the same as a frequency of the first clock, and a phase of the second clock is the same as a phase of the first clock. After receiving the first notification signal, the service board switches from the first clock to the second clock based on the first notification signal.

It can be learned from the foregoing process that when the control board is ready to be removed from the communications device, the first cross-connect board and the service board may be notified by using the first notification signal, and based on the signal, the first cross-connect board may maintain the second clock that is the same as the first clock generated by the control board, and the service board may switch from the first clock to the second clock. Therefore, after the control board goes offline, the clock source switches from the control board to the first cross-connect board, and the first cross-connect board may provide the second clock for synchronization to the service board. Therefore, clock synchronization may be maintained between the first cross-connect board and the service board, to continue to normally perform a related service, so that the service is not interrupted.

With reference to the first aspect, in a first implementation of the first aspect provided in embodiments of this application, the communications device further includes a second cross-connect board, and the first cross-connect board is connected to the second cross-connect board. The first cross-connect board is further configured to: after receiving the go-offline signal, send a second notification signal to the second cross-connect board and the service board. The second notification signal is used to indicate that the clock source switches from the first cross-connect board to the second cross-connect board. The second cross-connect board is configured to maintain a third clock based on the second notification signal by using a local crystal oscillator of the second cross-connect board. A frequency of the third clock is the same as the frequency of the second clock, and a phase of the third clock is the same as the phase of the second clock. The service board is further configured to switch from the second clock to the third clock based on the second notification signal.

In the foregoing implementation, after the first cross-connect board also receives a go-offline signal, because the communications device further includes a slave board of the first cross-connect board, that is, the second cross-connect board, the first cross-connect board may send the second notification signal to the second cross-connect board and the service board. Based on the signal, the second cross-connect board may maintain the third clock that is the same as the second clock, and the service board may switch from the second clock to the third clock. Therefore, after the first cross-connect board goes offline, the clock source switches from the first cross-connect board to the second cross-connect board, and the second cross-connect board may provide the third clock for synchronization to the service board. Therefore, clock synchronization may be maintained between the second cross-connect board and the service board, to continue to normally perform a related service, so that the service is not interrupted.

With reference to the first aspect or the first implementation of the first aspect, in a second implementation of the first aspect of embodiments of this application, the service board is specifically configured to perform clock and data recovery on a service signal from the first cross-connect board based on the first notification signal, to obtain the second clock.

In the foregoing implementation, after receiving the first notification signal, the service board may perform clock and data recovery on the service signal from the first cross-connect board, to obtain the second clock, to implement clock synchronization, so that a service is not interrupted, thereby improving flexibility and selectivity of the solution.

With reference to the first implementation of the first aspect or the second implementation of the first aspect, in a third implementation of the first aspect of embodiments of this application, the service board is specifically configured to perform clock and data recovery on a service signal from the second cross-connect board based on the second notification signal, to obtain the third clock.

In the foregoing implementation, after receiving the second notification signal, the service board may perform clock and data recovery on the service signal from the second cross-connect board, to obtain the third clock, to implement clock synchronization, so that a service is not interrupted, thereby improving flexibility and selectivity of the solution.

With reference to any one of the first aspect or the first implementation of the first aspect to the third implementation of the first aspect, in a fourth implementation of the first aspect of embodiments of this application, the control board is further configured to: after resuming to an online state, obtain the first clock based on the second clock maintained by the first cross-connect board; and send a third notification signal to the first cross-connect board and the service board. The third notification signal is used to indicate that the clock source switches from the first cross-connect board to the control board. The first cross-connect board is further configured to switch from the second clock to the first clock. The service board is further configured to switch from the second clock to the first clock.

In the foregoing implementation, after receiving a go-online signal and going online again, the control board may obtain the first clock based on the second clock maintained by the first cross-connect board, and then notify the first cross-connect board and the service board by using the third notification signal, so that the first cross-connect board and the service board use the control board as a clock source, and receive the first clock from the control board, to implement clock synchronization, thereby improving flexibility and selectivity of the solution.

With reference to any one of the first aspect or the first implementation of the first aspect to the fourth implementation of the first aspect, in a fifth implementation of the first aspect of embodiments of this application, the first notification signal is specifically used to indicate that the control board is about to go offline. Alternatively, the first notification signal is specifically used to indicate the first cross-connect board to maintain the second clock or indicate the service board to switch from the first clock to the second clock. This implementation improves flexibility and selectivity of the solution.

With reference to any one of the first implementation of the first aspect to the fifth implementation of the first aspect, in a sixth implementation of the first aspect of embodiments of this application, the second notification signal is specifically used to indicate that the first cross-connect board is about to go offline. Alternatively, the second notification signal is specifically used to indicate the second cross-connect board to maintain the third clock or indicate the service board to switch from the second clock to the third clock. This implementation improves flexibility and selectivity of the solution.

A second aspect of embodiments of this application provides a clock synchronization method. The method is applied to a communications device. The communications device includes a control board, a first cross-connect board, and a service board. The method includes: After receiving a go-offline signal, the control board sends a first notification signal to the first cross-connect board and the service board. The first notification signal is used to indicate that a clock source switches from the control board to the first cross-connect board. The first cross-connect board maintains a second clock based on the first notification signal by using a local crystal oscillator of the first cross-connect board. A frequency of the second clock is the same as a frequency of a first clock, a phase of the second clock is the same as a phase of the first clock, and the first clock is generated by the control board. The service board switches from the first clock to the second clock based on the first notification signal.

It can be learned from the foregoing method that when the control board is ready to be removed from the communications device, the first cross-connect board and the service board may be notified by using the first notification signal, and based on the signal, the first cross-connect board may maintain the second clock that is the same as the first clock generated by the control board, and the service board may switch from the first clock to the second clock. Therefore, after the control board goes offline, the clock source switches from the control board to the first cross-connect board, and the first cross-connect board may provide the second clock for synchronization to the service board. Therefore, clock synchronization may be maintained between the first cross-connect board and the service board, to continue to normally perform a related service, so that the service is not interrupted.

With reference to the second aspect, in a first implementation of the second aspect provided in embodiments of this application, the communications device further includes a second cross-connect board, and the first cross-connect board is connected to the second cross-connect board. After the service board switches from the first clock to the second clock based on the first notification signal, the method further includes:

After receiving the go-offline signal, the first cross-connect board sends a second notification signal to the second cross-connect board and the service board. The second notification signal is used to indicate that the clock source switches from the first cross-connect board to the second cross-connect board.

The second cross-connect board maintains a third clock based on the second notification signal by using a local crystal oscillator of the second cross-connect board. A frequency of the third clock is the same as the frequency of the second clock, and a phase of the third clock is the same as the phase of the second clock.

The service board switches from the second clock to the third clock based on the second notification signal.

In the foregoing implementation, after the first cross-connect board also receives a go-offline signal, because the communications device further includes a slave board of the first cross-connect board, that is, the second cross-connect board, the first cross-connect board may send the second notification signal to the second cross-connect board and the service board. Based on the signal, the second cross-connect board may maintain the third clock that is the same as the second clock, and the service board may switch from the second clock to the third clock. Therefore, after the first cross-connect board goes offline, the clock source switches from the first cross-connect board to the second cross-connect board, and the second cross-connect board may provide the third clock for synchronization to the service board. Therefore, clock synchronization may be maintained between the second cross-connect board and the service board, to continue to normally perform a related service, so that a service is not interrupted.

With reference to the second aspect or the first implementation of the second aspect, in a second implementation of the second aspect of embodiments of this application, that the service board switches from the first clock to the second clock based on the first notification signal specifically includes: The service board performs clock and data recovery on a service signal from the first cross-connect board based on the first notification signal, to obtain the second clock.

In the foregoing implementation, after receiving the first notification signal, the service board may perform clock and data recovery on the service signal from the first cross-connect board, to obtain the second clock, to implement clock synchronization, so that a service is not interrupted, thereby improving flexibility and selectivity of the solution.

With reference to the first implementation of the second aspect or the second implementation of the second aspect, in a third implementation of the second aspect of embodiments of this application, that the service board switches from the second clock to the third clock based on the second notification signal specifically includes: The service board performs clock and data recovery on a service signal from the second cross-connect board based on the second notification signal, to obtain the third clock. In this implementation, after receiving the second notification signal, the service board may perform clock and data recovery on the service signal from the second cross-connect board, to obtain the third clock, to implement clock synchronization, so that a service is not interrupted, thereby improving flexibility and selectivity of the solution.

With reference to any one of the second aspect or the first implementation of the second aspect to the third implementation of the second aspect, in a fourth implementation of the second aspect of embodiments of this application, the method further includes: After resuming to an online state, the control board obtains the first clock based on the second clock maintained by the first cross-connect board. The control board sends a third notification signal to the first cross-connect board and the service board. The third notification signal is used to indicate that the clock source switches from the first cross-connect board to the control board. The first cross-connect board switches from the second clock to the first clock. The service board switches from the second clock to the first clock.

In the foregoing implementation, after receiving a go-online signal and going online again, the control board may obtain the first clock based on the second clock maintained by the first cross-connect board, and then notify the first cross-connect board and the service board by using the third notification signal, so that the first cross-connect board and the service board use the control board as a clock source, and receive the first clock from the control board, to implement clock synchronization, thereby improving flexibility and selectivity of the solution.

For specific implementations and beneficial effects of the first notification signal and the second notification signal, refer to the descriptions of the fifth implementation and the sixth implementation of the first aspect. Details are not described herein again.

It can be learned from the foregoing technical solutions that, this application has the following advantages: After the control board goes offline, the clock source switches from the control board to the first cross-connect board, and both the first cross-connect board and the service board perform a subsequent related service based on the second clock, to continue to normally perform the related service, so that the service is not interrupted.

### BRIEF DESCRIPTION OF DRAWINGS

FIG. 1 is a schematic diagram of a structure of an OTN transmission device;
FIG. 2 is a schematic diagram of a structure of a communications device according to an embodiment of this application;
FIG. 3 is a schematic diagram of a bidirectional clock channel according to an embodiment of this application;
FIG. 4 is a schematic diagram of a unidirectional clock channel according to an embodiment of this application;
FIG. 5 is a schematic diagram of another structure of a communications device according to an embodiment of this application; and
FIG. 6 is a schematic flowchart of a clock synchronization method according to an embodiment of this application.

### DESCRIPTION OF EMBODIMENTS

Embodiments of this application provide a communications device and a clock synchronization method, to maintain clock synchronization between a cross-connect board and a service board after a control board goes offline, to continue to normally perform related service processing, thereby avoiding service processing interruption.

Embodiments of this application may be applied to a communications network. For ease of description, the following uses an example in which the communications device is an OTN transmission device for description. As shown in FIG. 1, the OTN transmission device includes a control board, a cross-connect board, and a service board. As a management board of the entire OTN transmission device, the control board manages and controls all of the other boards. The cross-connect board (also referred to as a switching board) is configured to schedule a service of the service board. The service board is configured to process a corresponding service under scheduling of the cross-connect board. It should be understood that a specific type of the communications device is not limited in this application. For example, the communications device may alternatively be a flexible Ethernet (Flexible Ethernet) device.

A plurality of control boards, a plurality of cross-connect boards, and a plurality of service boards are usually disposed in the OTN transmission device (for example, in the device shown in FIG. 1, a control board, cross-connect boards, and service boards that are presented in dashed lines are added on a basis of the control board, the cross-connect board, and the service board that are presented in solid lines). As shown in FIG. 1, the OTN transmission device includes two identical control boards, where one is a master control board, and the other is a slave control board, and is used as a slave board of the master control board.

To ensure that the entire OTN transmission device can properly process services, all boards need to maintain clock synchronization. The master control board is usually used as a clock source of the entire device, and provides a clock used for synchronization for each board in the device. If the master control board goes offline, the slave control board may replace the master control board as the clock source, and continue to provide a clock used for synchronization for each board. If both the master control board and the slave control board go offline, the cross-connect board and the service board cannot keep synchronization. As a result, service processing is interrupted.

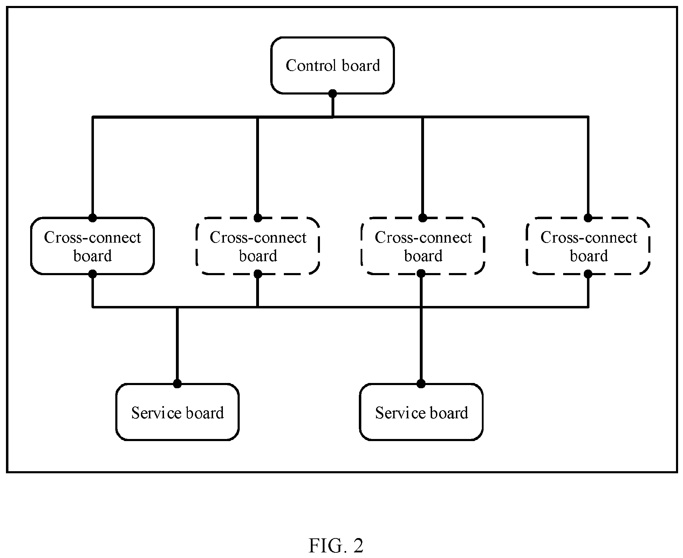

Therefore, embodiments of this application provide a communications device. FIG. 2 is a schematic diagram of a structure of a communications device according to an embodiment of this application. As shown in FIG. 2, the communications device includes a control board, a service board, a cross-connect board (that is, the cross-connect board shown by the solid line in FIG. 2) with a clock maintenance function, and a plurality of cross-connect boards (that is, the cross-connect boards shown by dashed lines in FIG. 2) without a clock maintenance function. It should be noted that clock maintenance is also referred to as clock holding.

It should be noted that a clock channel is connected between the control board and the cross-connect board and between the control board and the service board (FIG. 2 only shows a clock channel between the control board and the cross-connect board, that is, a connection line between the control board and the cross-connect board), and the control board may separately send a first clock to the cross-connect board and the service board through the clock channel, to implement clock synchronization.

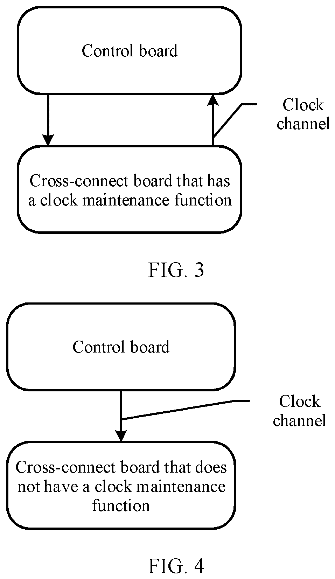

In this embodiment, the communications device includes one cross-connect board that has a clock maintenance function, and the board is referred to as a first cross-connect board below. In all cross-connect boards of the communications device, each cross-connect board has a local crystal oscillator with high stability, configured to maintain a clock having a parameter consistent with that of the first clock. There is a bidirectional clock channel between the first cross-connect board and the control board. FIG. 3 is a schematic diagram of a bidirectional clock channel according to an embodiment of this application. As shown in FIG. 3, in a process of maintaining a clock by using a local crystal oscillator, the first cross-connect board needs to perform clock-based interaction with the control board. This may be implemented through a bidirectional clock channel. FIG. 4 is a schematic diagram of a unidirectional clock channel according to an embodiment of this application. As shown in FIG. 4, in a plurality of cross-connect boards that do not have a clock maintenance function, there is a unidirectional clock channel between each cross-connect board and the control board. Therefore, the control board can transmit a clock signal to the cross-connect board, but the cross-connect board cannot transmit a clock signal to the control board. As a result, the cross-connect board does not have the clock maintenance function.

As shown in FIG. 2, a service channel is connected between any cross-connect board and any service board, and the cross-connect board may send a service signal to the service board through the service channel, so that the service board performs a corresponding service based on the service signal.

After receiving a go-offline signal, the control board may send a first notification signal to the first cross-connect board and the service boards. The first notification signal is used to indicate that a clock source switches from the control board to the first cross-connect board. Specifically, the control board may receive the go-offline signal in a plurality of manners. In a possible implementation, if the control board needs to be removed from the device, as the control board has a wrench, when a position of the wrench changes under an external force, the control board may determine a position change of the wrench in real time. When it is determined that the position change of the wrench meets a specific condition, it is determined that the control board is about to go offline, which is equivalent to that a go-offline signal is received. Further, an offline detection switch is disposed on the control board. The offline detection switch may detect the position change of the wrench on the control board in real time. If it is determined that the position change of the wrench meets the specific condition, it is determined that the control board is about to go offline, which is equivalent to that a go-offline signal is received. Alternatively, instructions may be sent by a network management system. This is not limited in this application.

In a possible implementation, the first notification signal is used to indicate that the control board is about to go offline. Specifically, when the control board is about to go offline, the control board respectively sends first notification signals to the first cross-connect board and the service boards. All the first notification signals are used to indicate that the control board is about to go offline. A corresponding rule is preconfigured on all the boards in the device. Based on the rule, when the boards receive the first notification signals, it is determined that the control board is about to go offline. Then, the first cross-connect board maintains a second clock, and the service boards switch between the first clock and the second clock.

In another possible implementation, the first notification signal is specifically used to indicate the first cross-connect board to maintain a second clock or indicate the service boards to switch from the first clock to the second clock. Specifically, when the control board is about to go offline, the control board respectively sends first notification signals to the first cross-connect board and the service boards. A first notification signal received by the first cross-connect board is used to indicate to maintain the second clock. First notification signals received by the service boards are used to indicate to switch between the first clock and the second clock. Therefore, after receiving the first notification signals, the first cross-connect board and the service boards respectively performs corresponding operations.

After receiving the first notification signal, the first cross-connect board maintains the second clock based on the first notification signal by using a local crystal oscillator of the first cross-connect board. A frequency of the second clock is the same as a frequency of the first clock, and a phase of the second clock is the same as a phase of the first clock. It may be understood that parameters of the second clock and the first clock are basically the same. The first clock comes from the control board, and the second clock comes from the first cross-connect board.

After receiving the first notification signals, the service boards switch from the first clock to the second clock based on the first notification signals. In a possible implementation, the service board may perform clock and data recovery (clock and data recovery, CDR) on a service signal from the first cross-connect board based on the first notification signal, to obtain the second clock. Specifically, a service channel is connected between a serializer/deserializer (serializer/deserializer, serdes) on the first cross-connect board and a serdes on the service board. Regardless of whether the control board is offline, the first cross-connect board continuously sends a service signal to each service board through a service channel to ensure that a service is not interrupted. It should be noted that before the control board goes offline, the first cross-connect board sends a service signal to the service board at a specific period based on the first clock. After the control board goes offline, because the first cross-connect board maintains the second clock, the first cross-connect board still sends a service signal to the service board at the same period based on the second clock. Therefore, after receiving the first notification signal, the service board may perform CDR based on a service signal received by the serdes of the service board, to obtain the second clock, that is, complete switching between the first clock and the second clock. After the service board switches from the first clock to the second clock, it is equivalent to synchronously tracing the first cross-connect board and using the first cross-connect board as a clock source, which can ensure that a current service of the communications device is not interrupted.

If the control board goes online again, all the boards may switch back to the clock of the control board. In a possible implementation, after resuming to an online state, the control board obtains the first clock based on the second clock maintained by the first cross-connect board. Then, the control board sends a third notification signal to the first cross-connect board and the service boards, so that the first cross-connect board and the service boards all switch from the second clock to the first clock. The third notification signal is used to indicate that the clock source switches from the first cross-connect board to the control board. Specifically, after the control board is reinserted into a corresponding slot of the device and is fully started, the control board obtains parameter information of the second clock from the first cross-connect board, and gradually adjusts the clock of the control board, so that a parameter of the clock of the control board is the same as the parameter of the second clock, which is equivalent to obtaining the first clock. After obtaining the first clock, the control board respectively sends third notification signals to the first cross-connect board, the service boards, and the cross-connect boards that do not have the clock maintenance function. The third notification signals may be used to indicate that the control board is offline. Therefore, based on the third notification signals, the cross-connect boards and the service boards switch from the second clock to the first clock, to continue to maintain clock synchronization, so that a service is not interrupted.

In this embodiment, when the control board is ready to be removed from the communications device, the first cross-connect board and the service boards may be notified by using the first notification signal. Based on the signal, the first cross-connect board may maintain the second clock that is the same as the first clock generated by the control board, and the service boards may switch from the first clock to the second clock. Therefore, after the control board goes offline, the clock source switches from the control board to the first cross-connect board, and the first cross-connect board may provide the second clock for synchronization to the service boards. Therefore, clock synchronization may be maintained between the first cross-connect board and the service boards, to continue to normally perform a related service, so that a service is not interrupted.

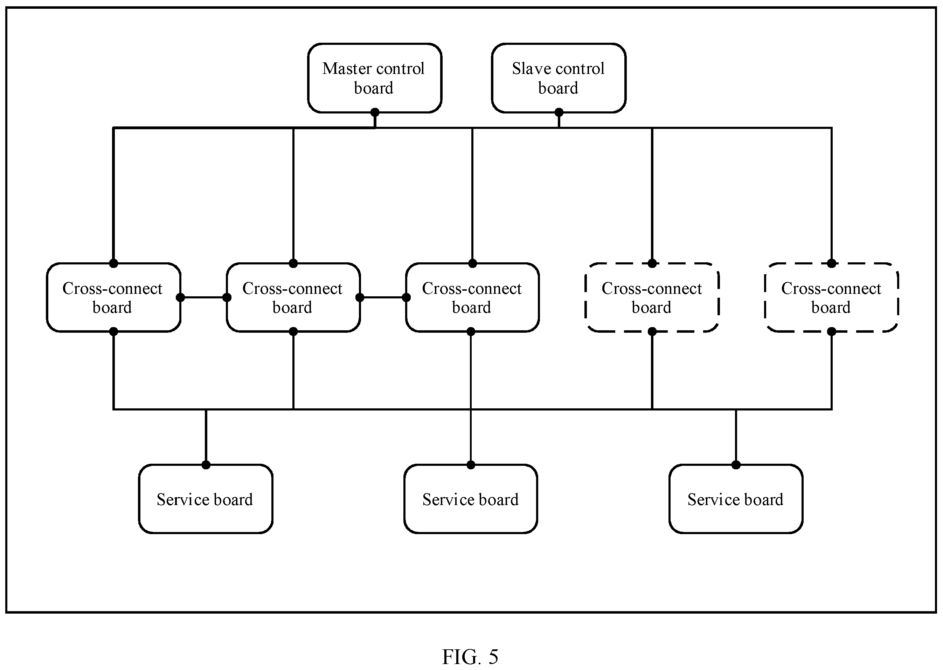

The communications device shown in FIG. 2 includes only one cross-connect board that has the clock maintenance function. In an actual application, the communications device may alternatively include a plurality of cross-connect boards that have the clock maintenance function. FIG. 5 is a schematic diagram of another structure of a communications device according to an embodiment of this application. As shown in FIG. 5, the communications device includes: a master control board, a slave control board, service boards, a plurality of cross-connect boards that have a clock maintenance function (cross-connect boards shown by solid lines in FIG. 5) and a plurality of cross-connect boards that do not have the clock maintenance function (cross-connect boards shown by dashed lines in FIG. 5).

The master control board is integrated with a clock function. When the master control board is online, a first clock required for synchronous working of each board in the device may be generated, and the first clock for synchronization is provided to each board. The control board may serve as a clock source of the entire communications device to provide the first clock to the slave control board, all the cross-connect boards, and all the service boards, so that all the boards of the entire device can work synchronously to process related service processing. It should be noted that clock channels (connection lines between two boards in FIG. 5) are connected between the master control board and the slave control board, between the master control board and the cross-connect boards, and between the master control board and the service boards. The master control board may separately send the first clock to the slave control board, the cross-connect boards, and the service boards through the clock channels, to implement clock synchronization.

When the master control board is online, the slave control board may synchronously trace the master control board to maintain the first clock. When the master control board is offline, the slave control board can take over the master control board and serve as the clock source of the entire device to provide the first clock to all the cross-connect boards and the service boards.

In this embodiment, the communications device includes a plurality of cross-connect boards that have the clock maintenance function. Each of the cross-connect boards has a bidirectional clock channel to the control board (the master control board and the slave control board). Therefore, in a process in which the cross-connect board maintains a clock by using a local crystal oscillator, clock-based interaction with the control board needs to be performed (that is, clocks need to be sent between the two), which may be implemented through the bidirectional clock channel. In the plurality of cross-connect boards that do not have the clock maintenance function, each cross-connect board has a unidirectional clock channel to the control board. Therefore, the part of cross-connect boards do not have the clock maintenance function. In the plurality of cross-connect boards that have the clock maintenance function, any two cross-connect boards are connected to each other, and priorities may be preconfigured and ranked for the part of cross-connect boards. When the control board goes offline, a cross-connect board with the highest priority may be selected as a clock source based on the priorities.

In the communications device, a service channel (a connection line between a cross-connect board and a service board in FIG. 5) is connected between any cross-connect board and any service board. The cross-connect board may send a service signal to the service board through the service channel, so that the service board performs a corresponding service based on the service signal.

If the master control board is removed, the slave control board may be used as the clock source of the entire device. After receiving a go-offline signal, the slave control board may send a first notification signal to a first cross-connect board and the service boards. The first notification signal is used to indicate that the clock source switches from the slave control board to the first cross-connect board. Specifically, the slave control board may receive the go-offline signal in a plurality of manners. In a possible implementation, if the slave control board needs to be removed from the device, as the slave control board has a wrench, when a position of the wrench changes under an external force, the slave control board may determine a position change of the wrench in real time. When it is determined that the position change of the wrench meets a specific condition, it is determined that the slave control board is about to go offline, which is equivalent to that a go-offline signal is received. Further, an offline detection switch is disposed on the slave control board, which may detect the position change of the wrench on the slave control board in real time. If it is determined that the position change of the wrench meets the specific condition, it is determined that the slave control board is about to go offline, that is, a go-offline signal is received.

It should be noted that the first notification signal may be presented in a plurality of manners, which are separately described below.

In a possible implementation, when the slave control board is about to go offline, a first notification signal is sent to all the service boards and all the cross-connect boards that have the clock maintenance function, to notify each board that the slave control board is about to go offline.

In another possible implementation, the control board respectively sends first notification signals to the plurality of cross-connect boards that have the clock maintenance function and the service boards. First notification signals received by the cross-connect board that have the clock maintenance function are used to indicate to maintain a second clock. Optionally, the plurality of cross-connect boards that receive the first notification signals may determine one of the cross-connect boards as a new clock source through information exchange. For example, priority information may be configured for the cross-connect boards that have the clock maintenance function for clock source selection. First notification signals received by the service boards are used to indicate to switch between the first clock and the second clock. For a specific description of clock switching, refer to a related description part in the embodiment shown in FIG. 2. Details are not described herein again.

In addition, when the first cross-connect board serves as the clock source of the entire device, the following several cases may occur:
(1) If the control board resumes to an online state, all the boards may synchronously trace the control board again. After receiving a go-online signal, the control board obtains parameter information of the second clock from the first cross-connect board, and gradually adjusts the clock of the control board, so that a parameter of the clock of the control board is the same as a parameter of the second clock, that is, obtains the first clock. After obtaining the first clock, the control board respectively sends third notification signals to all the cross-connect boards that have the clock maintenance function, the service boards, and all the cross-connect boards that do not have the clock maintenance function. The third notification signals may be used to indicate that the control board is online. Therefore, based on the third notification signals, all the cross-connect boards that have the clock maintenance function, the service boards, and all the cross-connect boards that do not have the clock maintenance function start to receive the first clock from the control board, to continue to maintain clock synchronization, so that a service is not interrupted.
(2) If the first cross-connect board receives a go-offline signal, the first cross-connect board sends a second notification signal to a second cross-connect board and the service boards. The second notification signal is used to indicate that the clock source switches from the first cross-connect board to the second cross-connect board. Then, the second cross-connect board maintains a third clock based on the second notification signal by using a local crystal oscillator of the second cross-connect board. A frequency of the third clock is the same as the frequency of the second clock, and a phase of the third clock is the same as the phase of the second clock. Finally, the service boards switch from the second clock to the third clock based on the second notification signal, to complete clock synchronization.

Specifically, the first cross-connect board sends the second notification signal to another cross-connect board in the plurality of cross-connect boards that have the clock maintenance function and the service boards. The second notification signal may be presented in a plurality of manners, which are separately described below.

In a possible implementation, the second notification signal is specifically used to indicate that the first cross-connect board is about to go offline.

In another possible implementation, the second notification signal is specifically used to indicate remaining cross-connect boards (including the second cross-connect board) other than the first cross-connect board in the plurality of cross-connect boards that have the clock maintenance function to maintain the third clock, or indicate the service board to switch from the second clock to the third clock.

After the remaining cross-connect boards other than the first cross-connect board in the plurality of cross-connect boards that have the clock maintenance function receive the second notification signal, a second cross-connect board may be determined in the remaining cross-connect boards. In a possible implementation, in the remaining cross-connect boards other than the first cross-connect board in the plurality of cross-connect boards that have the clock maintenance function, each cross-connect board maintains a third clock based on the second notification signal by using a local crystal oscillator. A phase of the third clock is the same as the phase of the second clock, and a frequency of the third clock is the same as the frequency of the second clock. Then, the remaining cross-connect boards other than the first cross-connect board in the plurality of cross-connect boards that have the clock maintenance function exchange information, to determine, from the part of cross-connect boards, a cross-connect board in a normal state (capable of running normally) and with the highest priority as a clock source, that is, determine a cross-connect board in a normal state and with the highest priority as a second cross-connect board. In another possible implementation, after the remaining cross-connect boards other than the first cross-connect board in the plurality of cross-connect boards that have the clock maintenance function receive the second notification signal, all the cross-connect boards exchange information, to determine, from the part of cross-connect boards, a cross-connect board in a normal state (capable of running normally) and with the highest priority as a clock source, that is, determine a cross-connect board in a normal state and with the highest priority as a second cross-connect board. Finally, the second cross-connect board maintains a third clock based on the second notification signal by using a local crystal oscillator.

After receiving the second notification signal, the service boards switch from the second clock to the third clock based on the second notification signal. The specific description of switching from the second clock to the third clock by the service board is similar to the related description of switching from the first clock to the second clock by the service board, and details are not described herein again.

(3) Based on the case (2), if a control board resumes to the online state, all the boards in the device need to synchronously trace the control board again. In this case, for specific descriptions of synchronous tracing of each board after the control board goes online again, refer to a related description part in the foregoing case (1), and details are not described herein again.

It should be understood that quantities of various types of boards (such as the control boards and the cross-connect boards) in FIG. 5 are merely examples. This is not limited in this application. For example, if the communications device includes a plurality of control boards, such as three or four, it is generally considered that the control board receives a go-offline signal when the last control board is about to go offline.

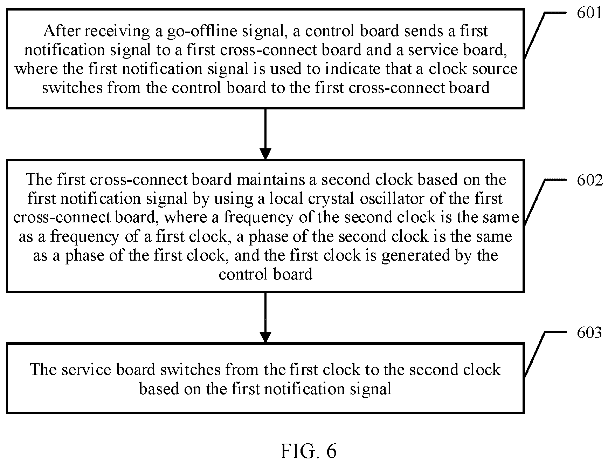

Based on the foregoing descriptions of the plurality of embodiments of the communications device, the following describes the clock synchronization method provided in embodiments of this application. FIG. 6 is a schematic flowchart of a clock synchronization method according to an embodiment of this application. As shown in FIG. 6, the method is applied to a communications device. The communications device includes a control board, a first cross-connect board, and a service board. The method includes the following steps.
601. After receiving a go-offline signal, the control board sends a first notification signal to the first cross-connect board and the service board. The first notification signal is used to indicate that a clock source switches from the control board to the first cross-connect board.
602. The first cross-connect board maintains a second clock based on the first notification signal by using a local crystal oscillator of the first cross-connect board. A frequency of the second clock is the same as a frequency of a first clock, a phase of the second clock is the same as a phase of the first clock, and the first clock is generated by the control board.
603. The service board switches from the first clock to the second clock based on the first notification signal.

In a possible implementation, the communications device further includes a second cross-connect board, and the first cross-connect board is connected to the second cross-connect board. After the service board switches from the first clock to the second clock based on the first notification signal, the method further includes: After receiving the go-offline signal, the first cross-connect board sends a second notification signal to the second cross-connect board and the service board. The second notification signal is used to indicate that the clock source switches from the first cross-connect board to the second cross-connect board. The second cross-connect board maintains a third clock based on the second notification signal by using a local crystal oscillator of the second cross-connect board. A frequency of the third clock is the same as the frequency of the second clock, and a phase of the third clock is the same as the phase of the second clock. The service board switches from the second clock to the third clock based on the second notification signal.

In a possible implementation, that the service board switches from the first clock to the second clock based on the first notification signal specifically includes: The service board performs CDR on a service signal from the first cross-connect board based on the first notification signal, to obtain the second clock.

In a possible implementation, that the service board switches from the second clock to the third clock based on the second notification signal specifically includes: The service board performs CDR on a service signal from the second cross-connect board based on the second notification signal, to obtain the third clock.

In a possible implementation, the method further includes: After resuming to an online state, the control board obtains the first clock based on the second clock maintained by the first cross-connect board. The control board sends a third notification signal to the first cross-connect board and the service board. The third notification signal is used to indicate that the clock source switches from the first cross-connect board to the control board. The first cross-connect board switches from the second clock to the first clock. The service board switches from the second clock to the first clock.

In a possible implementation, the first notification signal is specifically used to indicate that the control board is about to go offline. In another possible implementation, the first notification signal is specifically used to indicate the first cross-connect board to maintain the second clock or indicate the service board to switch from the first clock to the second clock.

In a possible implementation, the second notification signal is specifically used to indicate that the first cross-connect board is about to go offline. In another possible implementation, the second notification signal is specifically used to indicate the second cross-connect board to maintain the third clock or indicate the service board to switch from the second clock to the third clock.

For descriptions of the steps in the embodiment shown in FIG. 6, refer to related descriptions of embodiments shown in FIG. 2 to FIG. 5. Details are not described herein again.

In this embodiment, when the control board is ready to be removed from the communications device, the first cross-connect board and the service board may be notified by using the first notification signal, and based on the signal, the first cross-connect board may maintain the second clock that is the same as the first clock generated by the control board, and the service board may switch from the first clock to the second clock. Therefore, after the control board goes offline, the clock source switches from the control board to the first cross-connect board, and the first cross-connect board may provide the second clock for synchronization to the service board. Therefore, clock synchronization may be maintained between the first cross-connect board and the service board, to continue to normally perform a related service, so that the service is not interrupted.

## Claims

1. A communications device, comprising a control board, a first cross-connect board, and a service board, wherein the control board is configured to: after receiving a go-offline signal, send (601) a first notification signal to the first cross-connect board and the service board, wherein the first notification signal is used to indicate that a clock source switches from the control board to the first cross-connect board;
the first cross-connect board is configured to maintain (602) a second clock based on the first notification signal by using a local crystal oscillator of the first cross-connect board, wherein a frequency of the second clock is the same as a frequency of a first clock, a phase of the second clock is the same as a phase of the first clock, and the first clock is generated by the control board; and
the service board is configured to switch (603) from the first clock to the second clock based on the first notification signal.

2. The communications device according to claim 1, wherein the communications device further comprises a second cross-connect board, and the first cross-connect board is connected to the second cross-connect board;
the first cross-connect board is further configured to: after receiving the go-offline signal, send a second notification signal to the second cross-connect board and the service board, wherein the second notification signal is used to indicate that the clock source switches from the first cross-connect board to the second cross-connect board;
the second cross-connect board is configured to maintain a third clock based on the second notification signal by using a local crystal oscillator of the second cross-connect board, wherein a frequency of the third clock is the same as the frequency of the second clock, and a phase of the third clock is the same as the phase of the second clock; and
the service board is further configured to switch from the second clock to the third clock based on the second notification signal.

3. The communications device according to claim 1 or 2, wherein the service board is specifically configured to perform clock and data recovery CDR on a service signal from the first cross-connect board based on the first notification signal, to obtain the second clock.

4. The communications device according to claim 2 or 3, wherein the service board is specifically configured to perform CDR on a service signal from the second cross-connect board based on the second notification signal, to obtain the third clock.

5. The communications device according to any one of claims 1 to 4, wherein the control board is further configured to:
after resuming to an online state, obtain the first clock based on the second clock maintained by the first cross-connect board; and
send a third notification signal to the first cross-connect board and the service board, wherein the third notification signal is used to indicate that the clock source switches from the first cross-connect board to the control board;
the first cross-connect board is further configured to switch from the second clock to the first clock;
the service board is further configured to switch from the second clock to the first clock.

6. The communications device according to any one of claims 1 to 5, wherein the first notification signal is specifically used to indicate that the control board is about to go offline.

7. The communications device according to any one of claims 1 to 5, wherein the first notification signal is specifically used to indicate the first cross-connect board to maintain the second clock or indicate the service board to switch from the first clock to the second clock.

8. The communications device according to any one of claims 2 to 7, wherein the second notification signal is specifically used to indicate that the first cross-connect board is about to go offline.

9. The communications device according to any one of claims 2 to 7, wherein the second notification signal is specifically used to indicate the second cross-connect board to maintain the third clock or indicate the service board to switch from the second clock to the third clock.

10. A clock synchronization method, wherein the method is applied to a communications device, the communications device comprises a control board, a first cross-connect board, and a service board, and the method comprises:
after receiving a go-offline signal, sending (601), by the control board, a first notification signal to the first cross-connect board and the service board, wherein the first notification signal is used to indicate that a clock source switches from the control board to the first cross-connect board;
maintaining (602), by the first cross-connect board, a second clock based on the first notification signal by using a local crystal oscillator of the first cross-connect board, wherein a frequency of the second clock is the same as a frequency of a first clock, a phase of the second clock is the same as a phase of the first clock, and the first clock is generated by the control board; and
switching (603), by the service board, from the first clock to the second clock based on the first notification signal.

11. The method according to claim 10, wherein the communications device further comprises a second cross-connect board, the first cross-connect board is connected to the second cross-connect board, and after the switching, by the service board, from the first clock to the second clock based on the first notification signal, the method further comprises:
sending, by the first cross-connect board after receiving the go-offline signal, a second notification signal to the second cross-connect board and the service board, wherein the second notification signal is used to indicate that the clock source switches from the first cross-connect board to the second cross-connect board;
maintaining, by the second cross-connect board, a third clock based on the second notification signal by using a local crystal oscillator of the second cross-connect board, wherein a frequency of the third clock is the same as the frequency of the second clock, and a phase of the third clock is the same as the phase of the second clock; and
switching, by the service board, from the second clock to the third clock based on the second notification signal.

12. The method according to claim 10 or 11, wherein the switching, by the service board, from the first clock to the second clock based on the first notification signal specifically comprises:
performing, by the service board, CDR on a service signal from the first cross-connect board based on the first notification signal, to obtain the second clock.

13. The method according to claim 11 or 12, wherein the switching, by the service board, from the second clock to the third clock based on the second notification signal specifically comprises:
performing, by the service board, CDR on a service signal from the second cross-connect board based on the second notification signal, to obtain the third clock.

14. The method according to any one of claims 10 to 13, wherein the method further comprises:
obtaining, by the control board after resuming to an online state, the first clock based on the second clock maintained by the first cross-connect board;
sending, by the control board, a third notification signal to the first cross-connect board and the service board, wherein the third notification signal is used to indicate that the clock source switches from the first cross-connect board to the control board;
switching, by the first cross-connect board, from the second clock to the first clock; and
switching, by the service board, from the second clock to the first clock.

## Patentansprüche

1. Kommunikationsvorrichtung, die eine Steuertafel, eine erste Zwischenschalttafel und eine Dienstplatine umfasst, wobei
die Steuertafel konfiguriert ist zum: nach einem Empfangen eines Offline-Gehen-Signals, Senden (601) eines ersten Benachrichtigungssignals an die erste Zwischenschalttafel und die Dienstplatine, wobei das erste Benachrichtigungssignal verwendet wird, um anzugeben, dass eine Taktquelle von der Steuertafel auf die erste Zwischenschalttafel umschaltet;
die erste Zwischenschalttafel konfiguriert ist, um einen zweiten Takt basierend auf dem ersten Benachrichtigungssignal durch Verwenden eines lokalen Quarzoszillators der ersten Zwischenschalttafel aufrechtzuerhalten (602), wobei eine Frequenz des zweiten Takts die gleiche wie eine Frequenz eines ersten Takts ist, eine Phase des zweiten Takts die gleiche wie eine Phase des ersten Takts ist und der erste Takt durch die Steuertafel erzeugt wird; und
die Dienstplatine konfiguriert ist, um basierend auf dem ersten Benachrichtigungssignal von dem ersten Takt auf den zweiten Takt umzuschalten (603).

2. Kommunikationsvorrichtung nach Anspruch 1, wobei die Kommunikationsvorrichtung ferner eine zweite Zwischenschalttafel umfasst und die erste Zwischenschalttafel mit der zweiten Zwischenschalttafel verbunden ist;
wobei die erste Zwischenschalttafel ferner konfiguriert ist zum: nach dem Empfangen des Offline-Gehen-Signals, Senden eines zweiten Benachrichtigungssignals an die zweite Zwischenschalttafel und die Dienstplatine, wobei das zweite Benachrichtigungssignal verwendet wird, um anzugeben, dass die Taktquelle von der ersten Zwischenschalttafel auf die zweite Zwischenschalttafel umschaltet;
wobei die zweite Zwischenschalttafel konfiguriert ist, um einen dritten Takt basierend auf dem zweiten Benachrichtigungssignal durch Verwenden eines lokalen Quarzoszillators der zweiten Zwischenschalttafel aufrechtzuerhalten, wobei eine Frequenz des dritten Takts die gleiche wie die Frequenz des zweiten Takts ist und eine Phase des dritten Takts die gleiche wie die Phase des zweiten Takts ist; und
die Dienstplatine ferner konfiguriert ist, um basierend auf dem zweiten Benachrichtigungssignal von dem zweiten Takt auf den dritten Takt umzuschalten.

3. Kommunikationsvorrichtung nach Anspruch 1 oder 2, wobei die Dienstplatine speziell konfiguriert ist, um eine Takt- und Datenwiederherstellung CDR an einem Dienstsignal von der ersten Zwischenschalttafel basierend auf dem ersten Benachrichtigungssignal durchzuführen, um den zweiten Takt zu erhalten.

4. Kommunikationsvorrichtung nach Anspruch 2 oder 3, wobei die Dienstplatine speziell dafür konfiguriert ist, um die CDR an einem Dienstsignal von der zweiten Zwischenschalttafel basierend auf dem zweiten Benachrichtigungssignal durchzuführen, um den dritten Takt zu erhalten.

5. Kommunikationsvorrichtung nach einem der Ansprüche 1 bis 4, wobei die Steuertafel ferner konfiguriert ist zum:
nach einem Wiederaufnehmen eines Online-Zustands, Erhalten des ersten Takts basierend auf dem zweiten Takt, der durch die erste Zwischenschalttafel aufrechterhalten wird; und
Senden eines dritten Benachrichtigungssignals an die erste Zwischenschalttafel und die Dienstplatine, wobei das dritte Benachrichtigungssignal verwendet wird, um anzugeben, dass die Taktquelle von der ersten Zwischenschalttafel auf die Steuertafel umschaltet;
die erste Zwischenschalttafel ferner konfiguriert ist, um von dem zweiten Takt auf den ersten Takt umzuschalten;
die Dienstplatine ferner konfiguriert ist, um von dem zweiten Takt auf den ersten Takt umzuschalten.

6. Kommunikationsvorrichtung nach einem der Ansprüche 1 bis 5, wobei das erste Benachrichtigungssignal speziell verwendet wird, um anzugeben, dass die Steuertafel im Begriff ist, offline zu gehen.

7. Kommunikationsvorrichtung nach einem der Ansprüche 1 bis 5, wobei das erste Benachrichtigungssignal speziell verwendet wird, um anzugeben, dass die erste Zwischenschalttafel den zweiten Takt aufrechterhalten soll, oder anzugeben, dass die Dienstplatine von dem ersten Takt auf den zweiten Takt umschalten soll.

8. Kommunikationsvorrichtung nach einem der Ansprüche 2 bis 7, wobei das zweite Benachrichtigungssignal speziell verwendet wird, um anzugeben, dass die erste Zwischenschalttafel im Begriff ist, offline zu gehen.

9. Kommunikationsvorrichtung nach einem der Ansprüche 2 bis 7, wobei das zweite Benachrichtigungssignal speziell verwendet wird, um anzugeben, dass die zweite Zwischenschalttafel den dritten Takt aufrechterhalten soll, oder um anzugeben, dass die Dienstplatine von dem zweiten Takt auf den dritten Takt umschalten soll.

10. Taktsynchronisierungsverfahren, wobei das Verfahren auf eine Kommunikationsvorrichtung angewendet wird, wobei die Kommunikationsvorrichtung eine Steuertafel, eine erste Zwischenschalttafel und eine Dienstplatine umfasst und das Verfahren umfasst:
nach dem Empfangen eines Offline-Gehen-Signals, Senden (601), durch die Steuertafel, eines ersten Benachrichtigungssignals an die erste Zwischenschalttafel und die Dienstplatine, wobei das erste Benachrichtigungssignal verwendet wird, um anzugeben, dass eine Taktquelle von der Steuertafel auf die erste Zwischenschalttafel umschaltet;
Aufrechterhalten (602), durch die erste Zwischenschalttafel, eines zweiten Takts basierend auf dem ersten Benachrichtigungssignal durch Verwenden eines lokalen Quarzoszillators der ersten Zwischenschalttafel, wobei eine Frequenz des zweiten Takts die gleiche wie eine Frequenz eines ersten Takts ist, eine Phase des zweiten Takts die gleiche wie eine Phase des ersten Takts ist und der erste Takt durch die Steuertafel erzeugt wird; und
Umschalten (603), durch die Dienstplatine, von dem ersten Takt auf den zweiten Takt basierend auf dem ersten Benachrichtigungssignal.

11. Verfahren nach Anspruch 10, wobei die Kommunikationsvorrichtung ferner eine zweite Zwischenschalttafel umfasst, die erste Zwischenschalttafel mit der zweiten Zwischenschalttafel verbunden ist, und nach dem Umschalten, durch die Dienstplatine, von dem ersten Takt auf den zweiten Takt basierend auf dem ersten Benachrichtigungssignal das Verfahren ferner umfasst:
Senden, durch die erste Zwischenschalttafel, nach dem Empfangen des Offline-Gehen-Signals eines zweiten Benachrichtigungssignals an die zweite Zwischenschalttafel und die Dienstplatine, wobei das zweite Benachrichtigungssignal verwendet wird, um anzugeben, dass die Taktquelle von der ersten Zwischenschalttafel auf die zweite Zwischenschalttafel umschaltet;
Aufrechterhalten, durch die zweite Zwischenschalttafel, eines dritten Takts basierend auf dem zweiten Benachrichtigungssignal durch Verwenden eines lokalen Quarzoszillators der zweiten Zwischenschalttafel, wobei eine Frequenz des dritten Takts die gleiche wie die Frequenz des zweiten Takts ist und eine Phase des dritten Takts die gleiche wie die Phase des zweiten Takts ist; und
Umschalten, durch die Dienstplatine, von dem zweiten Takt auf den dritten Takt basierend auf dem zweiten Benachrichtigungssignal.

12. Verfahren nach Anspruch 10 oder 11, wobei das Umschalten, durch die Dienstplatine, von dem ersten Takt auf den zweiten Takt basierend auf dem ersten Benachrichtigungssignal speziell umfasst:
Durchführen, durch die Dienstplatine, der CDR an einem Dienstsignal von der ersten Zwischenschalttafel basierend auf dem ersten Benachrichtigungssignal, um den zweiten Takt zu erhalten.

13. Verfahren nach Anspruch 11 oder 12, wobei das Umschalten, durch die Dienstplatine, von dem zweiten Takt auf den dritten Takt basierend auf dem zweiten Benachrichtigungssignal speziell umfasst:
Durchführen, durch die Dienstplatine, der CDR an einem Dienstsignal von der zweiten Zwischenschalttafel basierend auf dem zweiten Benachrichtigungssignal, um den dritten Takt zu erhalten.

14. Verfahren nach einem der Ansprüche 10 bis 13, wobei das Verfahren ferner umfasst:
Erhalten, durch die Steuertafel, nach dem Wiederaufnehmen eines Online-Zustands des ersten Takts, basierend auf dem zweiten Takt, der durch die erste Zwischenschalttafel aufrechterhalten wird;
Senden, durch die Steuertafel, eines dritten Benachrichtigungssignals an die erste Zwischenschalttafel und die Dienstplatine, wobei das dritte Benachrichtigungssignal verwendet wird, um anzugeben, dass die Taktquelle von der ersten Zwischenschalttafel auf die Steuertafel umschaltet;
Umschalten, durch die erste Zwischenschalttafel, von dem zweiten Takt auf den ersten Takt; und
Umschalten, durch die Dienstplatine, von dem zweiten Takt auf den ersten Takt.

## Revendications

1. Dispositif de communications, comprenant une carte de commande, une première carte de connexion croisée et une carte de service, dans lequel la carte de commande est configurée pour : après la réception d'un signal de mise hors ligne, envoyer (601) un premier signal de notification à la première carte de connexion croisée et à la carte de service, dans lequel le premier signal de notification est utilisé pour indiquer qu'une source d'horloge commute de la carte de commande à la première carte de connexion croisée ;
la première carte de connexion croisée est configurée pour maintenir (602) une deuxième horloge en fonction du premier signal de notification en utilisant un oscillateur à cristal local de la première carte de connexion croisée, dans lequel une fréquence de la deuxième horloge est identique à une fréquence d'une première horloge, une phase de la deuxième horloge est identique à une phase de la première horloge, et la première horloge est générée par la carte de commande ; et
la carte de service est configurée pour commuter (603) de la première horloge à la deuxième horloge en fonction du premier signal de notification.

2. Dispositif de communications selon la revendication 1, dans lequel le dispositif de communications comprend en outre une seconde carte de connexion croisée, et la première carte de connexion croisée est connectée à la seconde carte de connexion croisée ;
la première carte de connexion croisée est en outre configurée pour : après la réception du signal de mise hors ligne, envoyer un deuxième signal de notification à la seconde carte de connexion croisée et à la carte de service, dans lequel le deuxième signal de notification est utilisé pour indiquer que la source d'horloge commute de la première carte de connexion croisée à la seconde carte de connexion croisée ;
la seconde carte de connexion croisée est configurée pour maintenir une troisième horloge en fonction du deuxième signal de notification en utilisant un oscillateur à cristal local de la seconde carte de connexion croisée, dans lequel une fréquence de la troisième horloge est identique à la fréquence de la deuxième horloge, et une phase de la troisième horloge est identique à la phase de la deuxième horloge ; et
la carte de service est en outre configurée pour commuter de la deuxième horloge à la troisième horloge en fonction du deuxième signal de notification.

3. Dispositif de communications selon la revendication 1 ou 2, dans lequel la carte de service est spécifiquement configurée pour réaliser une récupération d'horloge et de données, CDR, sur un signal de service provenant de la première carte de connexion croisée en fonction du premier signal de notification, afin d'obtenir la deuxième horloge.

4. Dispositif de communications selon la revendication 2 ou 3, dans lequel la carte de service est spécifiquement configurée pour réaliser une CDR sur un signal de service provenant de la seconde carte de connexion croisée en fonction du deuxième signal de notification, afin d'obtenir la troisième horloge.

5. Dispositif de communications selon l'une quelconque des revendications 1 à 4, dans lequel la carte de commande est en outre configurée pour :
après le retour à un état en ligne, obtenir la première horloge en fonction de la deuxième horloge maintenue par la première carte de connexion croisée ; et
envoyer un troisième signal de notification à la première carte de connexion croisée et à la carte de service, dans lequel le troisième signal de notification est utilisé pour indiquer que la source d'horloge commute de la première carte de connexion croisée à la carte de commande ;
la première carte de connexion croisée est en outre configurée pour commuter de la deuxième horloge à la première horloge ;
la carte de service est en outre configurée pour commuter de la deuxième horloge à la première horloge.

6. Dispositif de communications selon l'une quelconque des revendications 1 à 5, dans lequel le premier signal de notification est spécifiquement utilisé pour indiquer que la carte de commande est sur le point d'être mise hors ligne.

7. Dispositif de communications selon l'une quelconque des revendications 1 à 5, dans lequel le premier signal de notification est spécifiquement utilisé pour indiquer à la première carte de connexion croisée de maintenir la deuxième horloge ou pour indiquer à la carte de service de commuter de la première horloge à la deuxième horloge.

8. Dispositif de communications selon l'une quelconque des revendications 2 à 7, dans lequel le deuxième signal de notification est spécifiquement utilisé pour indiquer que la première carte de connexion croisée est sur le point d'être mise hors ligne.

9. Dispositif de communications selon l'une quelconque des revendications 2 à 7, dans lequel le deuxième signal de notification est spécifiquement utilisé pour indiquer à la seconde carte de connexion croisée de maintenir la troisième horloge ou pour indiquer à la carte de service de commuter de la deuxième horloge à la troisième horloge.

10. Procédé de synchronisation d'horloge, dans lequel le procédé est appliqué à un dispositif de communications, le dispositif de communications comprend une carte de commande, une première carte de connexion croisée, et une carte de service, et le procédé comprend :
après la réception d'un signal de mise hors ligne, l'envoi (601), par la carte de commande, d'un premier signal de notification à la première carte de connexion croisée et à la carte de service, dans lequel le premier signal de notification est utilisé pour indiquer qu'une source d'horloge commute de la carte de commande à la première carte de connexion croisée ;
le maintien (602), par la première carte de connexion croisée, d'une deuxième horloge en fonction du premier signal de notification en utilisant un oscillateur à cristal local de la première carte de connexion croisée, dans lequel une fréquence de la deuxième horloge est identique à une fréquence d'une première horloge, une phase de la deuxième horloge est identique à une phase de la première horloge, et la première horloge est générée par la carte de commande ; et
la commutation (603), par la carte de service, de la première horloge à la deuxième horloge en fonction du premier signal de notification.

11. Procédé selon la revendication 10, dans lequel le dispositif de communications comprend en outre une seconde carte de connexion croisée, la première carte de connexion croisée est connectée à la seconde carte de connexion croisée, et après la commutation, par la carte de service, de la première horloge à la deuxième horloge en fonction du premier signal de notification, le procédé comprend en outre :
l'envoi, par la première carte de connexion croisée après la réception du signal de mise hors ligne, d'un deuxième signal de notification à la seconde carte de connexion croisée et à la carte de service, dans lequel le deuxième signal de notification est utilisé pour indiquer que la source d'horloge commute de la première carte de connexion croisée à la seconde carte de connexion croisée ;
le maintien, par la seconde carte de connexion croisée, d'une troisième horloge en fonction du deuxième signal de notification en utilisant un oscillateur à cristal local de la seconde carte de connexion croisée, dans lequel une fréquence de la troisième horloge est identique à la fréquence de la deuxième horloge, et une phase de la troisième horloge est identique à la phase de la deuxième horloge ; et
la commutation, par la carte de service, de la deuxième horloge à la troisième horloge en fonction du deuxième signal de notification.

12. Procédé selon la revendication 10 ou 11, dans lequel la commutation, par la carte de service, de la première horloge à la deuxième horloge en fonction du premier signal de notification comprend spécifiquement :
la réalisation, par la carte de service, d'une CDR sur un signal de service provenant de la première carte de connexion croisée, en fonction du premier signal de notification, afin d'obtenir la deuxième horloge.

13. Procédé selon la revendication 11 ou 12, dans lequel la commutation, par la carte de service, de la deuxième horloge à la troisième horloge en fonction du deuxième signal de notification comprend spécifiquement :
la réalisation, par la carte de service, d'une CDR sur un signal de service provenant de la seconde carte de connexion croisée, en fonction du deuxième signal de notification, afin d'obtenir la troisième horloge.

14. Procédé selon l'une quelconque des revendications 10 à 13, dans lequel le procédé comprend en outre :
l'obtention, par la carte de commande après le retour à un état en ligne, de la première horloge en fonction de la deuxième horloge maintenue par la première carte de connexion croisée ;
l'envoi, par la carte de commande, d'un troisième signal de notification à la première carte de connexion croisée et à la carte de service, dans lequel le troisième signal de notification est utilisé pour indiquer que la source d'horloge commute de la première carte de connexion croisée à la carte de commande ;
la commutation, par la première carte de connexion croisée, de la deuxième horloge à la première horloge ; et
la commutation, par la carte de service, de la deuxième horloge à la première horloge.
